# EUROPÄISCHE PATENTSCHRIFT

(11) **EP 2 152 524 B1**
(45) Veröffentlichungstag und Bekanntmachung des Hinweises auf die Patenterteilung: **04.04.2012**
(21) Anmeldenummer: 08749381.3
(22) Anmeldetag: 07.05.2008
(51) Int. Cl.: B32B 27/08, B32B 27/36, B32B 38/10, B42D 1/00, B42D 15/10

(54) **VERFAHREN ZUR HERSTELLUNG EINES LAMINIERTEN DATENBLATTES MIT EINER BEFESTIGUNGSLASCHE**
METHOD FOR MANUFACTURING A LAMINATED DATA SHEET WITH A FASTENING FLAP
PROCÉDÉ POUR PRODUIRE UNE FEUILLE DE DONNÉES LAMINÉE POURVUE D'UNE LANGUETTE DE FIXATION

(30) Priorität: 08.05.2007 DE 102007021496
(43) Veröffentlichungstag der Anmeldung: 17.02.2010
(73) Patentinhaber: Giesecke & Devrient GmbH, 81677 München (DE)
(72) Erfinder: RIEDL, Josef, 85395 Attenkirchen (DE)
(86) Internationale Anmeldenummer: PCT/EP2008/003671
(87) Internationale Veröffentlichungsnummer: WO 2008/135285

(56) Entgegenhaltungen:
- EP-A- 1 380 442
- EP-A- 1 516 749
- EP-A- 1 640 156
- WO-A-2005/062244
- WO-A-2006/054072
- WO-A-2006/097276

## Beschreibung

Die Erfindung betrifft ein Verfahren zur Herstellung eines Datenblattes zur klappbaren Befestigung an einem Träger, insbesondere zur Einbindung in ein Paßbuch. Die Erfindung betrifft auch ein Datenblatt und ein Identifikationsdokument.

Aus der WO 2006/097276 A1 ist ein Verfahren zur Herstellung eines Datenblattes bekannt. Das Datenblatt besteht aus mehreren Kunststoffschichten, die zu einer Verbundfolie laminiert sind. Zur Befestigung des Datenblattes an einem Träger, wie beispielsweise einem Paßbuch, weist die Datenseite eine seitliche Befestigungszone in Form eines Gewebebandes auf. Das Gewebeband wird während des Laminierens an den Kunststoffschichten verankert. Damit während der Laminierung, d. h. während der Anwendung von Wärme und Druck, das Material der erweichenden Kunststoffschichten nicht verfließt, wird im Bereich des Gewebebandes ein neutrales Füllelement in Form eines Einlegestreifens verwendet. Mit diesem Einlegestreifen wird der Laminierdruck auf die Befestigungszone übertragen und eine innige Verbindung des Gewebebandes mit den darunter- bzw. darüberliegenden Schichten bewirkt. Sowohl die passgenaue Platzierung eines solchen Einlegestreifens, wie auch seine nachträgliche Entfernung, bedeuten zusätzlichen Aufwand und verteuern damit die Herstellung.

Aus der EP 1380 442 A1 ist ein Verfahren zur Herstellung eines Datenblattes bekannt, mit dem zunächst ein Folienstapel bei erhöhter Temperatur zusammen laminiert wird. Die Kernschicht des Stapels besteht aus geschäumten Polyethylen. Vor dem Laminieren wird diese Polyethylenschicht und eine darüber liegende Polycarbonatschicht randseitig mit einer Trennschicht bedruckt, so daß sich diese Folien in diesem Bereich während des Laminierens nicht mit den darüber bzw. darunterliegenden Schichten verbinden. Nach dem Laminieren wird der Folienstapel von beiden Seiten bis jeweils zu einer Trennschicht eingeschnitten bzw. eingestanzt. Durch leichtes Biegen des Randes des Folienstapels werden die abgetrennten Bereiche entfernt, so daß im Ergebnis etwa in der Mitte des Stapels seitlich eine Lasche herausragt, mit welcher das Datenblatt in ein Passbuch eingenäht oder anderweitig mit einem Träger verbunden werden kann.

Problematisch bei diesem Verfahren ist der passergenau von beiden Seiten durchzuführende Schneid- bzw. Stanzvorgang. Die Druckschrift erwähnt auch die Herstellung eines Datenblattes mit Hilfe nur eines einzigen Stanzvorgangs.

Der Erfindung liegt die Aufgabe zugrunde, die Nachteile der bekannten Verfahren zu vermeiden und ein kostengünstiges Verfahren anzugeben, mit dem ein Datenblatt der eingangs bezeichneten Art in hoher Qualität hergestellt werden kann.

Erfingdungsgemäß wird diese Aufgabe durch die Merkmale der Ansprüche 1 und 14 gelöst. Vorteilhafte Weiterbildungen sind Gegenstand der Unteransprüche.

Das Aufbringen der Trennschicht auf die unterste Folie der Kernschicht hat den Vorteil, daß die Trennschicht bei der späteren Materialentfernung zuverlässig ebenfalls entfernt wird. Zudem kann die Trennschicht dicker und entsprechend wirksamer ausgeführt werden.

Nachfolgend wird eine Ausführungsform der Erfindung an Hand der beigefügten Zeichnung beispielsweise beschrieben. Darin zeigen
Figur 1 ein Identifikationsdokument in Form eines Passbuches mit einer darin befestigten einzelnen Datenseite.
Figur 2 eine Aufsicht auf ein Datenblatt mit eingebettetem Chip und Antenne und
Figur 3 einen Querschnitt des in Figur 2 gezeigten Datenblatts.

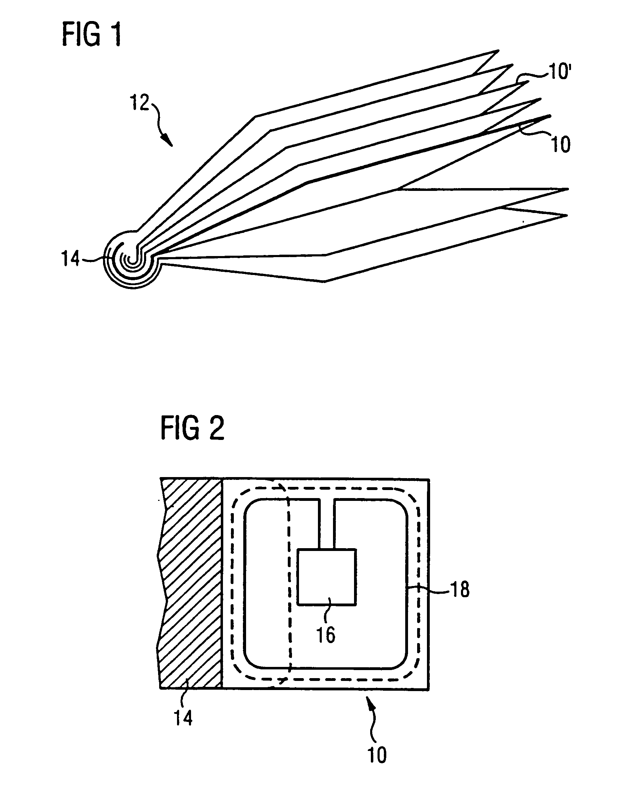

Figur 1 zeigt ein Datenblatt 10, daß zusammen mit anderen Blättern 10' in einem Paßbuch 12 eingebunden ist. Das Blatt 10 weist an seiner unteren Kante eine Befestigungslasche 14 auf, mit der das Blatt 10 in den Buchfalz eingenäht, eingeklebt oder eingeheftet ist.

Figur 2 zeigt das Datenblatt 10 in Aufsicht. Die Befestigungslasche 14 ist in dem Bereich, in dem sie seitlich aus dem Folienstapel des Blattes hinausragt schraffiert dargestellt. Der in die Folie einlaminierte Bereich der Befestigungslasche 14 ist strichpunktiert angedeutet.

Im Innenbereich des Datenblattes 10, z.B. mittig befindet sich in einer entsprechenden Ausnehmung ein Chipmodul 16, das mit einer in dem Datenblatt ausgebildeten Antenne 18 verbunden ist.

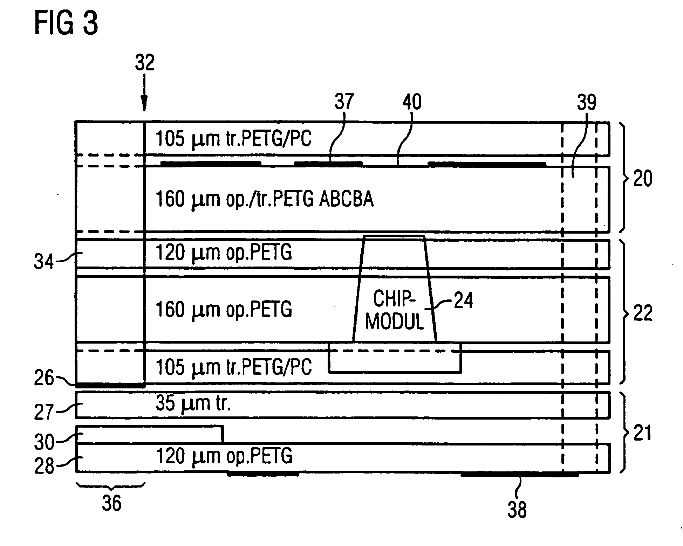

Figur 3 zeigt einen schematischen Querschnitt durch eine Ausführungsform des Datenblatts 10, bestehend aus einer zwei Folien enthaltendenoberseitigen Deckfolienkombination 20, einem im vorliegenden Fall drei Folien enthaltenden Kernfolienpaket 22 und einer rückseitigen, im dargestellten Beispiel aus drei Folien aufgebauten rückseitigen Folienkombination 21. Die Deckfolienkombination 20 bildet im fertigen Paßbuch 12 die Vorderseite des Datenblattes 10. Das Kernfolienpaket 22 dient zu Aufnahme eines Chipmoduls 24 und einer damit verbundenen Antenne 18. Die rückseitige Folienkombination 21 dient vor allem zur Ausbildung einer Befestigungslasche 14.

Die Einzelfolien von Deckfolienkombination 20 und Kernfolienpaket 22 haben im Ausführungsbeispiel Stärken zwischen 105 und 160 µm; die angegeben Stärken orientieren sich an erprobten Werten; grundsätzlich können alle genannten Werte aber selbstverständlich variiert werden.

Die obere Folie der Deckfolienkombination 20 besteht in dem gezeigten Ausführungsbeispiel aus einer Mischung von PETG (Polyethylenterephthalatglycol) und Polycarbonat und ist vorzugsweise transparent; sie kann auch als Laserschicht fungieren. Auf die Oberseite 40 der darunter angeordneten innenliegenden Folie der Deckfolienkombination 20 kann ein - durch die darüberliegende Folie hindurch sichtbarer - Designdruck 37 aufgebracht sein. In dem gezeigten Ausführungsbeispiel besteht die innenliegende Folie aus einer Mischung von PETG und PC (Polycarbonat) und besitzt eine Dicke von z.B. 160 µm. Diese Stärke erlaubt es insbesondere den Designdruck 37 in einem separat an der Folie ausführbaren Arbeitsschritt direkt auf die Folie zu bringen. Die innenliegende Folie der Deckfolienkombination 20 besteht ihrerseits zweckmäßig aus mehreren Schichten, etwa einer Schicht zum Belasern einerseits und laminierfreudigen Schichten zu Erzeugung einer innigen Verbindung mit den angrenzenden Folien andererseits.

In einer Variante können die beiden Einzelfolien der Deckfolienkombination 20 auch durch eine coextrudierte Folie mit Laseraufzeichnungsschicht ersetzt werden.

Das Kernfolienpaket 22 besteht aus einer oberen Folie aus PETG oder einer Mischung von PETG und PC mit einer Dicke von z.B. 120 µm, einer Mittelfolie, die ebenfalls aus PETG oder einer Mischung von PETG und PC besteht, insbesondere zur Aufnahme der Antenne 18 dient und eine Dicke von z.B. 160 µm aufweist, und einer unteren, gleichfalls aus PETG oder einer Mischung von PETG und PC bestehenden Folie mit einer Dicke von z.B. 105 µm. Die Folien weisen entsprechende Stanzungen für den Einsatz des Chipmoduls 24 mit Leadframe auf und können auch als Zwischenprodukt vorlaminiert sein. Zweckmäßig auf der mittleren Folie wird die Antenne 18 ausgebildet.

In einem seitlichen, außenliegenden Bereich des Kernfolienpakets 22 ist unter der Unterseite eine Trennschicht 26 aufgebracht. Sie ist mit der unteren Folie des Kernfolienpakets 22 verbunden, geht aber keine Verbindung zu anderen Folien, insbesondere nicht zu der darunterliegenden, obersten Folie der rückseitigen Folienkombination, ein.

Als rückseitige Folienkombination 21 kann zusammen mit einer Vermittlerschicht eine coextrudierte Folie 28 verwendet werden, die beim gezeigten Ausführungsbeispiel eine Dicke von z.B. 120 µm hat. Sie kann beispielsweise aus drei Schichten bestehen, einer oberen und unteren Schicht aus PETG (oder auch PC, die mittlere Schicht des Coextrudats kann aus Polyamid oder einem thermoplastischen Elastomer, etwa thermoplastischem Polyurethan (TPU) oder auch aus Polyolefinen bestehen. Die Außenseite der Folie 28 kann mit einem Designdruck 38 bedruckt, mit einem Lack versehen und/ oder mit einer - nicht gezeigten - weiteren transparenten Folie abgedeckt sein.

Die rückseitige Folienkombination 21, beinhaltet eine Vermittlerschicht 27, wie in Fig. 3 gezeigt. Bei dem gezeigten Ausführungsbeispiel hat sie eine Dicke von z.B. 35 µm. Sie dient dem zusätzlichen Schutz des im Kernfolienpaket 22 eingesetzten Chipmoduls 24 und im übrigen auch der Toleranzkompensation beim Schneiden des Stapels, worauf weiter unten noch eingegangen werden wird.

Zweckmäßig kann zwischen dem Kernfolienpaket 22 bzw. der Vermittlerschicht 27 und der rückseitigen Folienkombination 28 weiter ein Gewebeband 30 eingelegt werden. Das Gewebeband 30 verbessert die Reißfestigkeit und Flexibilität der Folien im betreffenden Bereich. Das Material des Gewebebandes 30 ist vorzugsweise Polyester oder Polyamid. Hinsichtlich der weiteren Beschaffenheit des Gewebebandes 30 wird auf die Druckschrift WO 2006/097276 A1 verwiesen. Die dortigen Ausführungen gelten gleichermaßen auch für das hier verwendete Gewebeband 30.

Die Herstellung des Datenblattes 10 erfolgt durch Laminierung in großflächigen Mehrnutzenbogen. Die Gewebebänder 30 können vor der Laminierung thermisch partiell auf den Bogen fixiert oder aufgeklebt werden.

Vor der eigentlichen Laminierung werden gegebenenfalls die unterste Schicht der rückseitigen Folienkombination und/oder die oberste Schicht der Deckfolienkombination 20 vorab bedruckt und beispielsweise mit einem Designdruck versehen. Desweiteren wird auf einer Folie des Kernfolienpaketes 22 die Antenne 18 ausgebildet, was ebenfalls durch Drucken oder auch durch Verlegen geschehen kann.

Weiterhin wird vor dem Laminieren die Trennschicht 26 aufgebracht. Das Aufbringen kann drucktechnisch erfolgen; das Material der Trennschicht 26 besteht dann aus einem Lack- oder Farbsystem, das durch das Laminieren keine Verbindung zu den umgebenden Polymerschichten, insbesondere zu der angrenzenden darunterliegenden Schicht eingeht. In einer Variante kann die Trennschicht 26 durch Einlegen einer vorzugsweise in Form eines Bandes gestalteten Folie gebildet werden, deren Glasübergangspunkt höher liegt als die nachfolgend beim Laminieren aufgebrachte Temperatur. Das Band wird z.B. auf eine bogenförmige Folie, die Bestandteil des Kernfolienpaketes ist, aufgespendet und durch thermische Einwirkung, z.B. mittels Lötkolben zumindest partiell fixiert. Das Band kann auch einseitig kleberbeschichtet sein; dies bietet sich vor allem bei der Verarbeitung der Folien in Rollen oder als Bahnware an. Vorgesehen sein kann auch die Folien mit den Bändern vorzulaminieren. In einer weiteren Variante wird die Trennschicht über ein Gießverfahren auf die Folie appliziert.

Zur Erzeugung des Datenblattes 10 werden die einzelnen Folien der Deckfolienkombination 20 und des Kernfolienpakets 22 dann zunächst unter Verwendung einer Fixiereinrichtung, z.B. in Form von in den Folien ausgebildeten Lochstanzungen 39 und entsprechenden - nicht weiter gezeigten - Fixierungselementen, lose übereinander gelegt und das Chipmodul 24 eingesetzt. Anschließend werden, gleichfalls unter Verwendung der Fixiereinrichtungen, die unteren Schichten 27, 28 und gegebenenfalls 30 lose aufgelegt. Der gesamte Folienstapel mit dem Chipmodul 24 wird nachfolgend unter Anwendung von Wärme und Druck laminiert. Entscheidend ist, daß es während der Laminierung keinerlei Abstufungen oder freigestellte Lagen in dem Folienstapel gibt, so daß sich die Folien nicht verziehen oder das Material der Folien wandert.

Nach dem Laminieren wird der resultierende monolithische Folienstapel in Randnähe in einem Bereich oberhalb des Gewebebandes von der Oberseite her senkrecht zur Folienebene entlang der durch die Linie 32 bestimmten Ebene ausgestanzt oder eingeschnitten, so daß ein Teil des Folienstapels vom restlichen Folienstapel getrennt wird. Der Schnitt bzw. die Stanzung kann mechanisch, z.B. mittels eines Rollenmessers oder einer Stanzform oder durch einen Laser bewirkt werden. Ohne weiteres kann ein Schnitt auch gefräst werden. Die Stanzung bzw. der Schnitt reicht bis zu der Trennschicht 26 und dringt in diese ein. Zweckmäßig endet der Schnitt bzw. die Stanzung genau an der Vermittlerschicht 27 ohne diese einzuschneiden. Erfolgt der Materialabtrag zur Erzeugung der Linie 32 durch Stanzen, wird zweckmäßig zugleich mit der Erzeugung der Stanzung entlang der Linie 32 der gesamte Stapel durch eine parallel vorgenommene Stanzung in seine Endform, d.h. in das für das Datenblatt 10 gewünschte Format gebracht.

Der durch den Materialabtrag entlang der Linie 32 abgetrennte Bereich 34 des Stapels wird anschließend entfernt. Dies kann durch leichtes Biegen oder Vibration des gesamten Stapels durch Abknicken des Stapels und/ oder durch Einsatz von Preßluft erfolgen.

Seitlich am Stapel wird dadurch aus der rückseitigen Folienkombination 21 ein Bereich 36 herausgebildet, der als Befestigungslasche 14 für das Datenblatt 10 dient (siehe Figur 1).

In einer Variante kann das Kernfolienpaket 22 vorlaminiert sein.

Das beschriebene Verfahren eignet sich insbesondere für großflächige Mehrnutzbogen oder auch für die großtechnische Fertigung vom Rollenformat.

## Patentansprüche

1. Verfahren zur Herstellung eines Datenblattes (10) zur klappbaren Befestigung an einem Träger, insbesondere zur Einbringung in ein Paßbuch 12 mit folgenden Schritten:
- Bereitstellung einer vorderseitigen Deckfolienkombination (20) und eines gegebenenfalls vorlaminierten Kernfolienpakets (22), welches elektronische Bauteile enthalten kann,
- randseitiges Aufbringen einer Trennschicht (26) auf die Unterseite des Kernfolienpakets (22), sowie
- Bereitstellen einer rückseitigen Folienkombination (28),
- Einlegen einer Vermittlerschicht (27) zwischen das Kernfolienpaket (22) und die rückseitige Folienkombination (28),
- gegebenenfalls randseitiges Einlegen eines Gewebebandes (30) zwischen Vermittlerschicht (27) und rückseitige Folienkombination (28),
- Fixieren der Einzelfolien in ihrer Solllage,
- Laminieren der Deckfolienkombination (20), des Kernfolienpakets (22), der Vermittlerschicht (27), des Gewebebandes (30) und der rückseitigen Folienkombination (28),
- randseitiges Trennen der Deckfolienkombination (20) und des Kernfolienpakets (22) bis zur Vermittlerschicht (27) im Bereich des Gewebebandes (30), wobei auch die Trennschicht (26) durchtrennt wird,
- Entfernen der abgetrennten Folienbereiche einschließlich der Trennschicht (26) zur Bildung einer randseitigen Befestigungslasche (14), bestehend nur aus rückseitiger Folienkombination (28), Vermittlerschicht (27) und Gewebeband (30).

2. Verfahren nach Anspruch 1, **dadurch gekennzeichnet, daß** das randseitige Trennen der Folien durch Stanzen, Schneiden, Fräsen oder mittels Laser erfolgt.

3. Verfahren nach Anspruch 1 oder 2, **dadurch gekennzeichnet, daß** das Fixieren der Einzelfolien mittels Stiften erfolgt, die durch seitliche Lochstanzungen (39) in den Folien durchgesteckt werden.

4. Verfahren nach Anspruch 1, **dadurch gekennzeichnet, daß** die rückseitige Folienkombination (28) eine mechanisch stabile coextrudierte Folie aufweist und daß kein Gewebeband verwendet wird.

5. Verfahren nach Anspruch 4, **dadurch gekennzeichnet, daß** die coextrudierte Folie aus einer oberen und einer unteren Schicht aus PETG (Polyethylenterephthalatglycol) oder PC und die mittlere Schicht aus Polyamid, TPE oder Polyolefinen besteht.

6. Verfahren nach einem der Ansprüche 1 bis 3, **dadurch gekennzeichnet, daß** die Deckfolienkombination (20) eine erste transparente Folie mit einer Dicke von etwa 105 µm und eine zweite opake Folie mit einer Dicke von etwa 160 µm aufweist, wobei beide Folien aus PETG oder einer Mischung von PETG und PC bestehen.

7. Verfahren nach einem der Ansprüche 1 bis 3, **dadurch gekennzeichnet, daß** die Deckfolienkombination (20) eine opake coextrudierte Folie mit Laseraufzeichnungsschicht ist.

8. Verfahren nach Anspruch 6 oder 7, **dadurch gekennzeichnet, daß** das Kernfolienpaket (22) aus einer ersten oberen Folie aus PETG mit einer Dicke von etwa 120 µm, einer weiteren zweiten Folie aus PETG mit einer Dicke von etwa 160 µm und einer dritten unteren Folie mit einer Dicke von etwa 105 µm aufgebaut ist, wobei alle Folien aus PETG oder einer Mischung von PETG und PC bestehen, und die Folien eine Ausnehmung für ein Chipmodul (24) sowie eine gedruckte oder verlegte Antenne aufweisen.

9. Verfahren nach einem der Ansprüche 6 bis 8, **dadurch gekennzeichnet, daß** die rückseitige Folienkombination (28) eine opake Folie aus PETG mit einer Dicke von 120 µm ist.

10. Verfahren nach Anspruch 9, **dadurch gekennzeichnet, daß** die Folie (28) rückseitig bedruckt und mit einer transparenten Folie abgedeckt ist.

11. Verfahren nach einem der Ansprüche 1 bis 10, **dadurch gekennzeichnet, daß** das Gewebeband (30) ein Siebdruckgewebe aus Polyesterfasern oder Polyamidfasern ist.

12. Verfahren nach Anspruch 8, **dadurch gekennzeichnet, daß** die Unterseite der untersten Folie des Kernfolienpakets (22) randseitig mit einem Trennlack (26) bedruckt wird.

13. Verfahren nach einem der Ansprüche 6 bis 11, **dadurch gekennzeichnet, daß** die Vermittlerschicht (27) eine Dicke von 25 bis 45 µm hat.

14. Datenblatt zur klappbaren Befestigung an einem Träger, insbesondere zur Einbringung in ein Paßbuch, bestehend aus mehreren, einen Stapel bildenden laminierten Folienschichten aus Kunststoff mit einer
vorderseitigen Deckfolienkombination (20),
einem gegebenenfalls vorlaminierten Kernfolienpaket (22), welches elektronische Bauteile enthalten kann,
einer rückseitigen Folienkombination (28), und einer über den Rand des Stapels seitlich herausragenden Befestigungslasche (14), die keine Trennschichten aufweist **dadurch gekennzeichnet, daß** eine Vermittlerschicht (27) zwischen dem Kernfolienpaket (22) und der rückseitigen Folienkombination (28) vorherden ist und gegebenenfalls ein Gewebeband (30) randseitig zwischen Vermittlerschicht (27) und rückseitige Folienkombination (28) eingelegt ist, daß die Lasche (14) nur aus der rückseitigen Folienkombination (28), der Vermittlerschicht (27) und ggf. dem Gewebeband (30) besteht und daß das Datenblatt nach einem oder mehreren der Ansprüche 1 bis 13 herstellbar ist.

15. Identifikationsdokument mit mehreren Seiten, **dadurch gekennzeichnet, daß** eine der Seiten ein Datenblatt gemäß Anspruch 14 ist.

## Claims

1. A method for producing a data sheet (10) for swinging attachment to a carrier, in particular for incorporation into a passport booklet (12), having the following steps:
- making available a front-side cover foil combination (20) and an optionally prelaminated core foil package (22) which can contain electronic components,
- applying a separating layer (26) to the underside of the core foil package (22) on the edge side, and
- making available a back-side foil combination (28),
- inserting an intermediary layer (27) between the core foil package (22) and the back-side foil combination (28),
- optionally inserting a fabric band (30) between intermediary layer (27) and back-side foil combination (28) on the edge side,
- fixing the single foils in their target position,
- laminating the cover foil combination (20), the core foil package (22), the intermediary layer (27), the fabric band (30) and the back-side foil combination (28),
- separating the cover foil combination (20) and the core foil package (22) on the edge side up to the intermediary layer (27) in the region of the fabric band (30), thereby also severing the separating layer (26),
- removing the detached foil regions including the separating layer (26) to form an edge-side attachment tab (14), consisting only of back-side foil combination (28), intermediary layer (27) and fabric band (30).

2. The method according to claim 1, **characterized in that** the edge-side separating of the foils is effected by punching, cutting, milling or by means of laser.

3. The method according to claim 1 or 2, **characterized in that** the fixing of the single foils is effected by means of pins which are inserted through lateral hole punchings (39) in the foils.

4. The method according to claim 1, **characterized in that** the back-side foil combination (28) has a mechanically stable coextruded foil and that no fabric band is employed.

5. The method according to claim 4, **characterized in that** the coextruded foil consists of an upper and a lower layer of PETG (polyethylene terephthalate glycol) or PC, and the middle layer of polyamide, TPE or polyolefins.

6. The method according to any of claims 1 to 3, **characterized in that** the cover foil combination (20) has a first transparent foil with a thickness of about 105 µm and a second opaque foil with a thickness of about 160 µm, whereby both foils consist of PETG or a mixture of PETG and PC.

7. The method according to any of claims 1 to 3, **characterized in that** the cover foil combination (20) is an opaque coextruded foil with a laser recording layer.

8. The method according to claim 6 or 7, **characterized in that** the core foil package (22) is constructed from a first upper foil of PETG with a thickness of about 120 µm, a further second foil of PETG with a thickness of about 160 µm and a third lower foil with a thickness of about 105 µm, whereby all foils consist of PETG or a mixture of PETG and PC, and the foils have a recess for a chip module (24) as well as a printed or laid antenna.

9. The method according to any of claims 6 to 8, **characterized in that** the back-side foil combination (28) is an opaque foil of PETG with a thickness of 120 µm.

10. The method according to claim 9, **characterized in that** the foil (28) is printed on the back side and covered with a transparent foil.

11. The method according to any of claims 1 to 10, **characterized in that** the fabric band (30) is a screen printing fabric of polyester fibers or polyamide fibers.

12. The method according to claim 8, **characterized in that** the underside of the lowermost foil of the core foil package (22) is printed on the edge side with a separating lacquer (26).

13. The method according to any of claims 6 to 11, **characterized in that** the intermediary layer (27) has a thickness of 25 to 45 µm.

14. A data sheet for swinging attachment to a carrier, in particular for incorporation into a passport booklet, consisting of several laminated foil layers of plastic which form a stack, having a
front-side cover foil combination (20),
an optionally prelaminated core foil package (22) which can contain electronic components,
a back-side foil combination (28), and
an attachment tab (14) protruding laterally over the edge of the stack and having no separating layers,
**characterized in that** an intermediary layer (27) is present between the core foil package (22) and the back-side foil combination (28), and a fabric band (30) is optionally inserted between intermediary layer (27) and back-side foil combination (28) on the edge side, that the tab (14) consists only of the back-side foil combination (28), the intermediary layer (27) and optionally the fabric band (30), and that the data sheet is producible according to one or several of claims 1 to 13.

15. An identification document having several pages, **characterized in that** one of the pages is a data sheet according to claim 14.

## Revendications

1. Procédé de fabrication d'une fiche de données (10) destinée à être fixée de manière rabattante sur un support, notamment à être insérée dans un passeport (12), comprenant les étapes suivantes :
- préparation d'une combinaison de feuilles de couverture (20) avant et d'un paquet de feuilles centrales (22) prélaminé le cas échéant, lequel peut contenir des composants électroniques,
- application en marge d'une couche de séparation (26) sur la face inférieure du paquet de feuilles centrales (22), ainsi que
- préparation d'une combinaison de feuilles (28) arrière,
- insertion d'une couche de liaison (27) entre le paquet de feuilles centrales (22) et la combinaison de feuilles (28) arrière,
- le cas échéant, insertion en marge d'une bande textile (30) entre la couche de liaison (27) et la combinaison de feuilles (28) arrière,
- fixation des feuilles individuelles dans leur position de consigne,
- laminage de la combinaison de feuilles de couverture (20), du paquet de feuilles centrales (22), de la couche de liaison (27), de la bande textile (30) et de la combinaison de feuilles (28) arrière,
- découpe en marge de la combinaison de feuilles de couverture (20) et du paquet de feuilles centrales (22) jusqu'à la couche de liaison (27) au niveau de la bande textile (30), la couche de séparation (26) étant elle aussi découpée.
- retrait des parties de feuilles découpées, y compris de la couche de séparation (26), pour former une patte de fixation (14) marginale, composée seulement de la combinaison de feuilles (28) arrière, de la couche de liaison (27) et de la bande textile (30).

2. Procédé selon la revendication 1, **caractérisé en ce que** la découpe marginale des feuilles est effectuée par estampage, découpage, fraisage ou au moyen d'un laser.

3. Procédé selon la revendication 1 ou la revendication 2, **caractérisé en ce que** la fixation des feuilles individuelles est réalisée au moyen de broches qui sont fichées dans les feuilles au travers de perforations latérales (39).

4. Procédé selon la revendication 1, **caractérisé en ce que** die la combinaison de feuilles (28) arrière comporte une feuille coextrudée mécaniquement stable et **en ce qu'**aucune bande textile n'est utilisée.

5. Procédé selon la revendication 4, **caractérisé en ce que** la feuille coextrudée se compose d'une couche supérieure et d'une couche inférieure en PETG (polyéthylène téréphtalate glycol) ou en PC, et **en ce que** la couche centrale se compose de polyamide, de TPE ou de polyoléfines.

6. Procédé selon l'une des revendications 1 à 3, **caractérisé en ce que** la combinaison de feuilles de couverture (20) comprend une première feuille transparente ayant une épaisseur de 105 µm environ et une deuxième feuille opaque ayant une épaisseur de 160 µm environ, les deux feuilles étant composées de PETG ou d'un mélange de PETG et de PC.

7. Procédé selon l'une des revendications 1 à 3, **caractérisé en ce que** la combinaison de feuilles de couverture (20) est une feuille coextrudée opaque avec une couche de gravure laser.

8. Procédé selon la revendication 6 ou la revendication 7, **caractérisé en ce que** le paquet de feuilles centrales (22) est structuré avec une première feuille supérieure en PETG ayant une épaisseur de 120 µm environ, une deuxième feuille en PETG ayant une épaisseur de 160 µm environ et une troisième feuille inférieure ayant une épaisseur de 105 µm environ, toutes les feuilles étant composées de PETG ou d'un mélange de PETG et de PC, et les feuilles comportant un évidement pour un module de carte à puce (24) ainsi qu'une antenne imprimée ou appliquée.

9. Procédé selon l'une des revendications 6 à 8, **caractérisé en ce que** la combinaison de feuilles (28) arrière est une feuille opaque en PETG ayant une épaisseur de 120 µm.

10. Procédé selon la revendication 9, **caractérisé en ce que** la feuille (28) est imprimée au verso et recouverte par une feuille transparente.

11. Procédé selon l'une des revendications 1 à 10, **caractérisé en ce que** la bande textile (30) est un tissu d'impression en fibres polyester ou en fibres polyamide.

12. Procédé selon la revendication 8, **caractérisé en ce que** le verso de la feuille inférieure du paquet de feuilles centrales (22) est imprimé en marge avec un vernis séparateur (26).

13. Procédé selon l'une des revendications 6 à 11, **caractérisé en ce que** la couche de liaison (27) a une épaisseur comprise entre 25 et 45 µm.

14. Fiche de données destinée à être fixée de manière rabattante sur un support, notamment à être insérée dans un passeport, composée de plusieurs couches de feuilles laminées en matière plastique, formant une pile, avec une
combinaison de feuilles de couverture (20) avant
un paquet de feuilles centrales (22) prélaminé le cas échéant, lequel peut contenir des composants électroniques,
une combinaison de feuilles (28) arrière, et
une patte de fixation (14) dépassant latéralement du bord de la pile et ne comprenant pas de couches de séparation, **caractérisée en ce qu'**une couche de liaison (27) est présentée entre le paquet de feuilles centrales (22) et la combinaison de feuilles (28) arrière, **en ce qu'**une bande textile (30) est le cas échéant insérée en marge entre la couche de liaison (27) et la combinaison de feuilles (28) arrière, **en ce que** la patte (14) est composée seulement de la combinaison de feuilles (28) arrière, de la couche de liaison (27) et de la bande textile (30) le cas échéant, et **en ce que** la fiche de données peut être fabriquée selon une ou plusieurs des revendications 1 à 13.

15. Document d'identification de plusieurs pages, **caractérisé en ce qu'**une des pages est une fiche de données selon la revendication 14.
